# EUROPEAN PATENT SPECIFICATION

(11) **EP 4 391 497 B1**
(45) Date of publication and mention of the grant of the patent: **06.08.2025**
(21) Application number: 22306945.1
(22) Date of filing: 19.12.2022
(51) Int. Cl.: H04L 69/324, H04L 49/25, H04L 45/00, H04L 69/22

(54) **ETHERNET MAC SUBLAYER SUPPORTING CUT-THROUGH FORWARDING**
ETHERNET-MAC-UNTERSCHICHT ZUR UNTERSTÜTZUNG VON CUT-THROUGH-WEITERLEITUNG
SOUS-COUCHE MAC ETHERNET SUPPORTANT UN TRANSFERT À TRAVERS UNE SECTION

(43) Date of publication of application: 26.06.2024
(73) Proprietor: Mitsubishi Electric R&D Centre Europe BV, 1119 NS Schiphol Rijk Amsterdam (NL); MITSUBISHI ELECTRIC CORPORATION, Chiyoda-ku Tokyo 100-8310 (JP)
(72) Inventor: MANGIN, Christophe, 35708 Rennes Cedex 7 (FR)
(74) Representative: Plasseraud IP

(56) References cited:
- EP-A1- 3 573 297
- US-A1- 2012 002 680

## Description

The present disclosure relates to telecommunication signals processing.

The IEEE 802 standards, in particular the Ethernet related standards specified by IEEE 802.3 and IEEE 802.1, are based on the layered protocol model introduced by the OSI Basis Reference Model, where protocol entities instantiated in a given protocol layer communicate with other protocol entities instantiated in the same protocol layer. This communication taking place within a given layer relies on the service provided by the protocol layer immediately below.

The relative layer position of protocol entities and services are referred to by the index N. Thus the (N)-service is provided by an (N)-entity that uses the (N-1)-service provided by an (N-1)-entity. The (N)-service user is an (N+1)-entity.

Each service is provided to a single protocol entity at a Service Access Point (SAP). A given (N)-entity can support a number of N-SAPs and use one or more (N-1)-SAPs. A SAP is then an abstraction that marks the boundary between protocol specifications and specifies the observable behaviour between entities.

(N)-Service users interact with (N)-Service providers through primitives and their parameters.

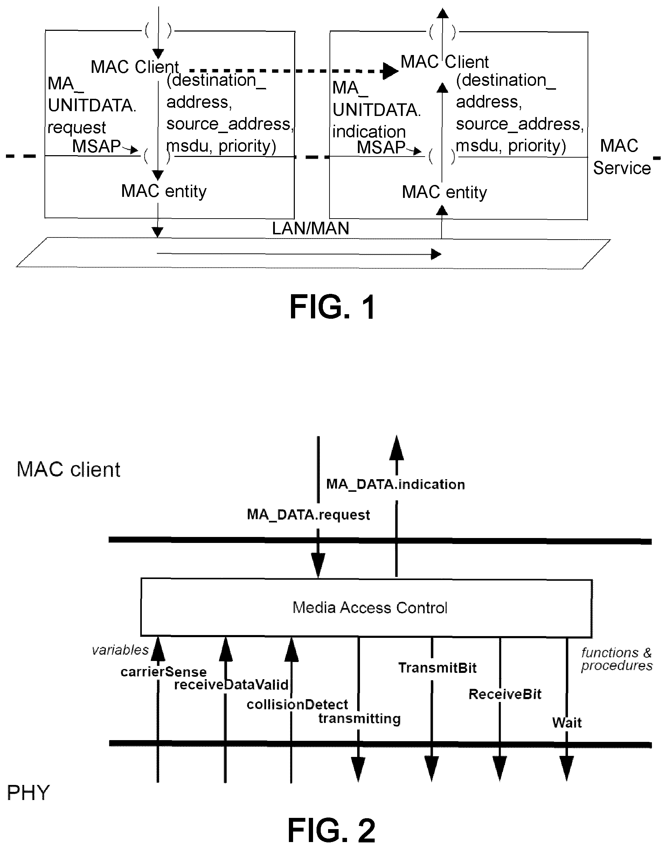

Figure 1 illustrates these concepts through the Media Access Control (MAC) sublayer (Included in OSI layer 2) of Ethernet networks, which contains MAC entities providing MAC service to MAC service users (MAC clients).

In the case of the IEEE 802 MAC Service, two primitives are defined:
- a data request and a data indication that convey as parameters
   ∘ a MAC destination address,
   ∘ a MAC source address,
   ∘ a MAC Service Data Unit (MSDU) containing one or more octets, and
   ∘ priority parameters.

These parameters constitute a frame.

Figure 1 illustrates the MAC service primitives possibly used in a bridge (as specified in IEEE Std 802.1AC): MA_UNITDATA.request and MA_UNITDATA.indication.

Specification IEEE Std 802.3 specifies the service provided by the MAC sublayer to the client of the MAC with slightly modified primitive's names and parameters.

Figure 2 illustrates the primitives handled by the MAC service (supported by the MAC sublayer as specified in IEEE Std 802.3) with the MAC client (upper layer) and the Physical layer (PHY, lower layer).

The parameters of the primitives are described below:

```
    MA_DATA.request {
                         destination_address,
                          source_address,
                          mac_service_data_unit,
                          frame-check-sequence
                          }
```

The destination_address parameter specifies either an individual or a group MAC entity address. It contains sufficient information to create the DA field (Destination Address) that is prepended to the frame by the local MAC sublayer entity and any physical information.

The source_address parameter, if present, specifies an individual MAC address. If the source_address (SA) parameter is omitted, the local MAC sublayer entity inserts a value associated with that entity.

The mac_service_data_unit parameter specifies the MAC service data unit to be transmitted by the MAC sublayer entity. There is sufficient information associated with the mac_service_data_unit for the MAC sublayer entity to determine the length of the data unit.

The frame_check_sequence parameter, if present, specifies the frame check sequence field for the frame. If the frame_check_sequence parameter is omitted, the local MAC sublayer entity computes this field and appends it to the end of the frame.

When received, the MAC sublayer entity inserts all MAC specific fields (DA, SA, ...) and pass the frame formed from this information to the lower protocol layers for transfer to the peer MAC sublayer entities.

```
    MA_DATA.indication {
                         destination_address,
                          source_address,
                          mac_service_data_unit,
                          frame-check-sequence,
                          reception_status
                          }
```

The destination_address parameter may be either an individual or a group address as specified by the DA field of the incoming frame.

The source_address parameter is an individual address as specified by the SA field of the incoming frame.

The mac_service_data_unit parameter specifies the MAC service data unit as received by the local MAC entity.

The frame_check_sequence parameter is the cyclic redundancy check value as specified by the FCS field (for "Frame Check Sequence") of the incoming frame. This parameter may be either omitted or (optionally) passed by the MAC sublayer entity to the MAC client.

The reception_status parameter is used to pass status information to the MAC client entity.

The MA_DATA.indication is passed from the MAC sublayer entity to the MAC client entity or entities to indicate the arrival of a frame to the local MAC sublayer entity that is destined for the MAC client. Such frames are reported only if they are validly formed, received without error.

The IEEE 802.3's MA_DATA.x primitives are mapped/adapted to the respective IEEE 802.1's MA_UNITDATA.x primitives by:
- ignoring the priority parameter specified for M_UNITDATA.request to form the corresponding MA_DATA.request
- not providing the priority parameter specified for M_UNITDATA.indication from the corresponding MA_DATA.indication
- removing the frame_check_sequence parameter to form the corresponding MA_UNITDATA.indication
- not mapping the reception_status in the corresponding MA_UNITDATA.indication

As to IEEE standard 802.1 bridges, according to a VLAN bridge architecture, such a bridge comprises at least one bridge component, which includes:
- A MAC Relay Entity that interconnects the Bridge's Ports
- At least two Ports
- Higher layer entities

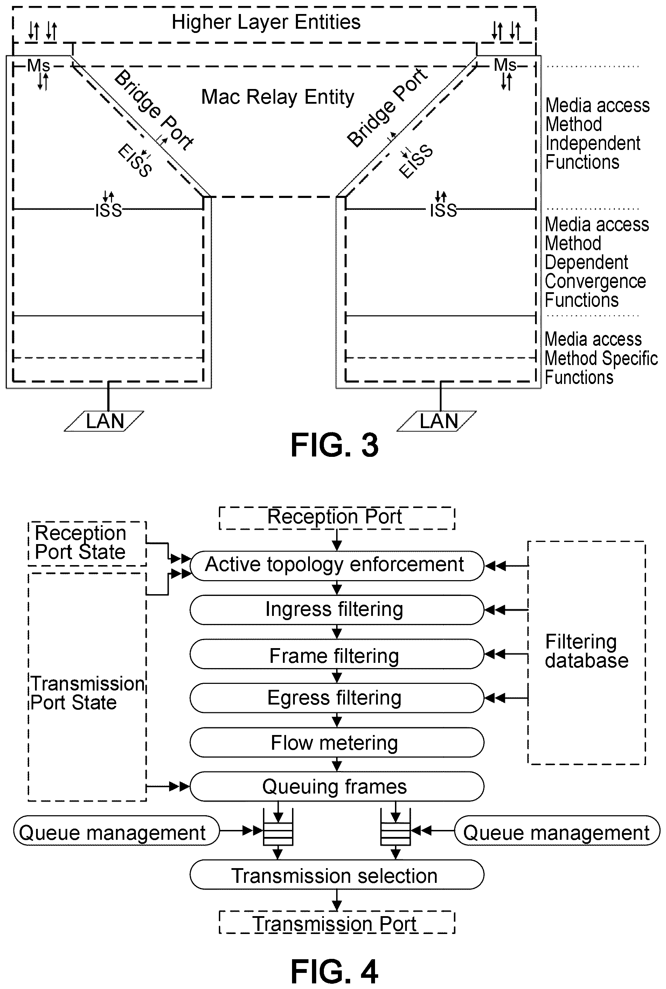

The architecture of a VLAN bridge is illustrated in Figure 3.

The MAC Relay Entity handles the media access method-independent functions of relaying frames among Bridge Ports, filtering frames, and learning filtering information. It uses the Enhanced Internal Sublayer Service (EISS) provided by each Bridge Port. The EISS augments the ISS (Internal Sublayer Service) that provides the basic MAC service in a bridge port.

In bridge ports, the MAC client is formed of the ISS and the EISS, with the ISS performing a convergence function as a client of the IEEE 802.3 MAC sublayer by translating the primitive exchanged with the IEEE 802.3 MAC sublayer.

In this particular case, the primitives provided by the ISS are the M_UNITDATA.indication and the M_UNITDATA.request, which convey the following parameters:

```
 M_UNITDATA.indication {
                         destination_address,
                          source_address,
                          mac_service_data_unit,
                          priority,
                          drop_eligible,
                          frame-check-sequence,
                          service_access_point_identifier,
                          connection_identifier
                          }
```

```
 M_UNITDATA.request {
                         destination_address,
                          source_address,
                          mac_service_data_unit,
                          priority,
                          drop_eligible,
                          frame-check-sequence,
                          service_access_point_identifier,
                          connection_identifier
                          }
```

The M_UNITDATA.request is translated into an IEEE 802.3 MA_DATA.request as follows:
- The destination_address and source_address parameters are passed unaltered.
- The mac_service_data_unit is potentially padded to comply with the minimum frame length required by IEEE 802.3.
- If a frame_check_sequence is included in the M_UNITDATA.request primitive, its value is adjusted to include any added padding.
- The priority, drop_eligible, service_access_point_identifier, and connection_identifier parameters are ignored.

Conversely, the IEEE 802.3 MA_DATA.indication is translated into an M_UNITDATA.request as follows:
- The destination_address, source_address, mac_service_data_unit, and frame_check_sequence parameters are passed unaltered.
- The drop_eligible parameter of the M_UNITDATA.indication is FALSE.
- The priority parameter of the M_UNITDATA.indication takes the value of the Default Priority parameter for the SAP on which the MA_DATA.indication was received. The priority parameter can be set by management or left to its default value of 0.

The EISS' primitives add three parameters to the ISS primitives, among which the vlan_identifier that carries the VID included in the VLAN-Tag of a VLAN-tagged frame. The mac-service-data-unit parameter passed over the EISS is two-byte shorter than the mac-service-data-unit parameter passed over the ISS, since the vlan_id parameter is extracted from the two-byte VLAN-Tag located in the two first bytes of the ISS' mac-service-data-unit parameter.

The main functions of a VLAN bridge are:
- Relay and filter frames
- Maintain the information required to make frame filtering and relaying decisions
- Management

They are distributed between the bridge's port, forwarding process and higher-layer functions and can be listed as follows:
- Frame reception
- Discard of received frame in error
- Discard of frames that do not carry user data
- Priority and drop eligibility decoding from a VLAN tag, if present, and regeneration of priority, if required
- Assignment of a VID to each received frame
- Ensure that each frame is confined to an active topology
- Frame discard to support management control over the active topology of each VLAN
- Frame discard following the application of filtering information
- Metering of frames, potentially marking as drop eligible or discarding frames exceeding bandwidth limits.
- Forwarding of received frames to other Bridge Ports
- Selection of traffic class and queuing of frames by traffic class
- Frame discard to ensure that a maximum Bridge transit delay is not exceeded
- Preferential discard of drop eligible frames to preserve QoS for other frames
- Selection of queued frames for transmission
- Mapping of SDUs and FCS recalculation, if required
- Frame discard on transmittable SDU size exceeded
- Selection of outbound access priority
- Frame transmission

The set of functions performing the actions taken for a given frame received on a given Port (termed "the reception Port") by the MAC Relay Entity constitutes the Forwarding Process. A frame can be forwarded for transmission on some Ports (termed "transmission Ports") and discarded without being transmitted at other Ports.

The Forwarding Process' functions are illustrated in Figure 4.

The MAC sublayer operation described here is limited to the full duplex operation as specified in IEEE Std 802.3 Annex 4A.

For the transmission, upon a MAC client request, the data supplied by the client is used by the Transmit Data Encapsulation component of the full duplex MAC sublayer to construct the frame.

It prepends a preamble and a Start of Frame Delimiter at the head of the frame and possibly appends a Pad at the end of the MAC service data unit to meet the minimum frame size requirement. It also prepends the destination and source addresses and optionally appends the frame check sequence for error detection. Frame transmission is initiated once the carrierSense signal is removed and after the required inter-frame delay (see Figure 1).

The MAC sublayer indicates to the MAC client when the transmission has completed and waits for the next frame transmission request.

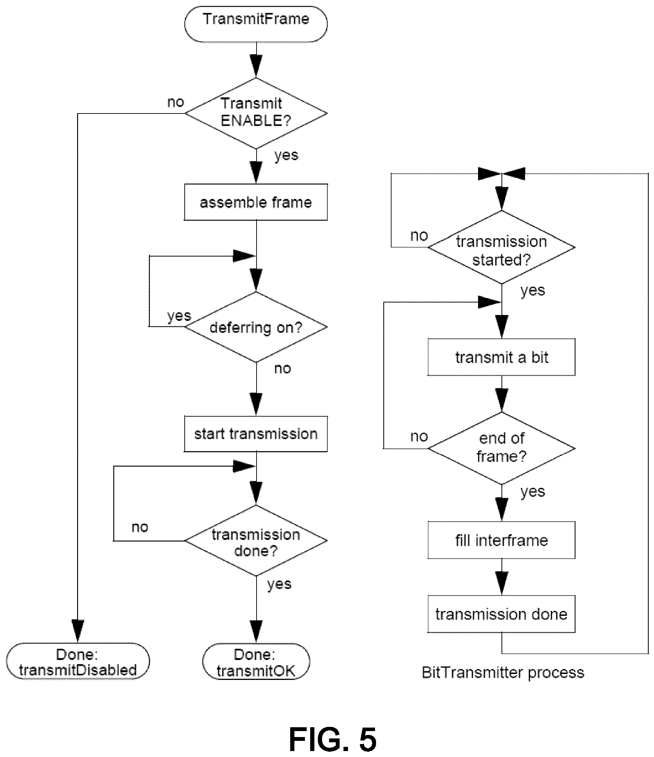

The IEEE Std 802.3 specifies the control flow of the transmission operation as presented in Figure 5.

As for the reception, the reception of a frame is detected by the Physical Layer by synchronizing on an incoming preamble and indicating the receiveDataValid signal (in the MAC sublayer). The Physical Layer passes further decoded bits to the MAC sublayer that discards the preamble and Start of Frame Delimiter. Received bits are collected as long as the receiveDataValid signal remains active. Upon its removal the frame is truncated to an octet boundary and passed to the Receive Data Decapsulation for processing.

The Receive Data Decapsulation passes the Destination Address (DA), the Source Address (SA), the MAC service data unit, and (optionally) the Frame Check Sequence (FCS) as well as a status code.

It checks the FCS to detect errored frames.

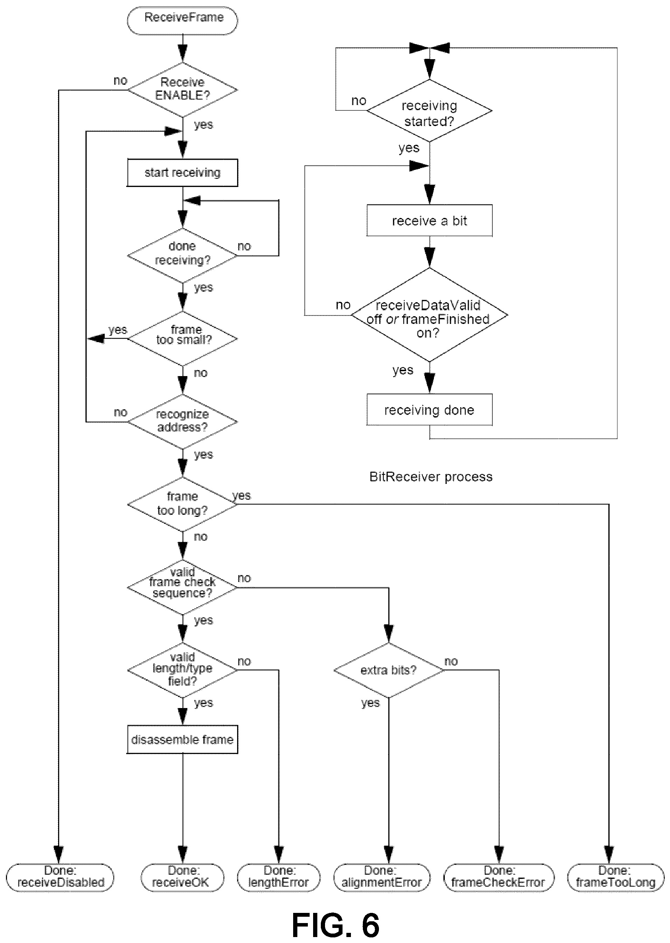

The IEEE Std 802.3 also illustrates the control flow of the reception operation, as presented in Figure 6.

The overview of the full duplex MAC sublayer given above shows that the information entity handled by the IEEE Std 802.3 MAC sublayer is a whole frame.

In reception, the MAC sublayers wait for the indication of the completion of the bit-by-bit reception of a frame by the Physical Layer, through the receiveDataValid envelop signal, before starting the frame decapsulation process and presenting the received frame to the MAC client via the indication primitive.

Similarly, in transmission, the MAC client must provide all the information elements required by the MAC to the IEEE 802.3 MAC sublayer so that the latter can proceed with the assembly of the frame and provide it to the Physical Layer for bit-by-bit transmission.

Hence, the MAC client involved in the ports of IEEE 802.1 compliant bridges (ISS and above) also handles whole frames, that are the information units manipulated by the forwarding process function of MAC Relay entity in the bridges.

This way of transmitting, receiving and forwarding a frame, called "store and forward", implies a latency proportional to the size of the frame each time a network node including a MAC sublayer and a MAC relay entity is traversed.

This accumulative latency is adversary to the transmission performance required by some time-critical applications such as industrial, audio/video or internal data center communications.

A reduction of this latency to a minimum can be achieved by modifying the behavior of the IEEE 802.3 MAC sublayer so that it handles the frames in smaller consecutive parts that carry enough information in order to be processed by the bridge's MAC relay entity. Such a forwarding principle is called "cut-through forwarding" and can lead to the frames being forwarded on the egress port of a bridge before it is totally received over the ingress port.

Since cut-through forwarding is not specified by IEEE 802.3 and 802.1 standards, no method for identifying frames to be cut-through forwarded is defined.

By handling the frame segments before the FCS, computed over the whole frame, has been checked, forwarding in cut-through mode can introduce the risk that:
- the identification of the frames to be cut-through forwarded
- and the forwarding process
take errored frame information as input for their decisions.

This information includes the DA, SA and some other data field included in MAC service data unit (e.g. the VLAN-ID in the VLAN-Tag). Neither the IEEE 802.3 MAC sublayer nor the IEEE 802.1 MAC clients and forwarding process provide protection against such errors.

In addition, prior art document US-2012/002680 discloses a cut-through mode of operation depending on priority levels of frame fragments ([0034]).

EP3573297 proposes a packet forwarding processing of a MAC layer on a per-packet basis, without considering a specific service type. For example, whether the packet is a latency-sensitive service is not considered. Forwarding of a next packet can start before a current packet is wholly sent ([0041]).

The present disclosure aims to improve the situation.

To that end, it proposes a method for transmitting an Ethernet MAC frame, implemented by a communication device having an egress port to form the frame to be transmitted based on received data of said frame.

The communication device comprises more particularly a bridge (comprising the aforesaid egress port and possibly also an ingress port) operating according to an OSI layers' model comprising:
- a MAC sublayer for providing a MAC service,
- an upper layer related to a MAC client,
- and a lower physical layer.

The method comprises:
- Checking whether, among said data of the frame, at least one parameter related to a segmentation of said frame is present, and - When said parameter related to frame segmentation is present, said MAC client provides a series of frame segments called "chunks" to the MAC sublayer to implement a frame transmit function (TransmitFrame as presented in the examples below), uninterruptedly as long as the frame to be transmitted is not completely transferred over the MAC service layer.

The forming of the frame at the egress port is started without waiting for a reception of all the frame data, according to a cut-through forwarding mode.

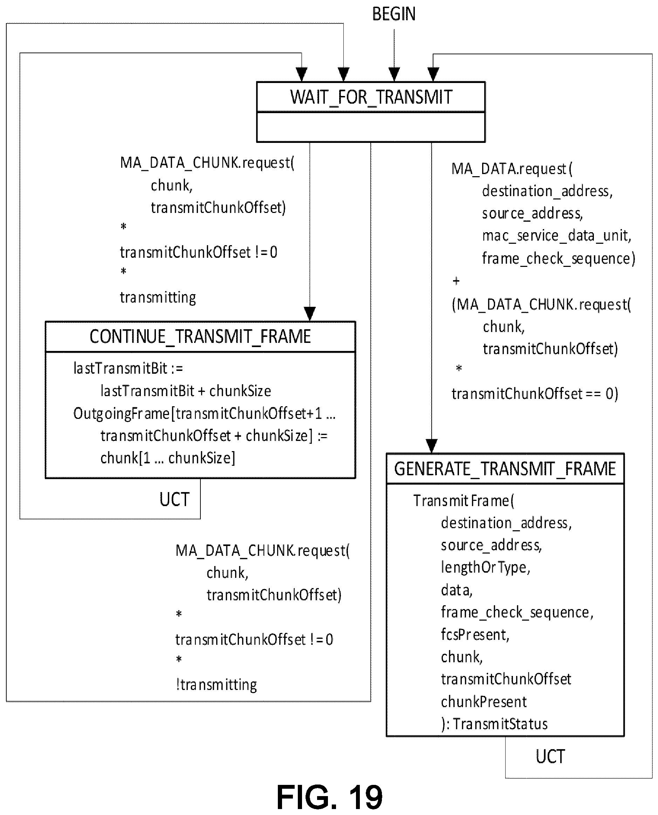

The aforesaid "at least one parameter" can be typically one of those presented for example in the transmission scheme of Figure 19 (right lower frame), such as "chunk", "transmitChunkOffset", "chunkPresent", as presented in the examples of embodiment detailed below.

The aforesaid cut-through forwarding mode makes it possible therefore to start sending first bits of a frame even if the whole frame itself (i.e. its last bits) is not ready yet for transmission. This cut-through forwarding mode opposes then to the usual store and forward mode usually used for transmitting a MAC Ethernet frame where its last bits need to be processed before starting the frame transmission.

Typically, in an embodiment where the communication device comprises an ingress port to receive data of the frame to transmit, the step of forming the frame can be started at the egress port without waiting for a reception of all the frame data at the ingress port.

Therefore, when forwarding a frame from one communication device to another, the frame transmission can start even before receiving its last bits.

In an embodiment, the frame data further include a chunk size parameter and chunks are progressively passed up to the MAC client each time a number of bits of the frame equal to the chunk size parameter is received from said physical layer.

In an embodiment, the frame data further include a chunk offset parameter indicating a position of a chunk in a succession of bits constituting the frame, relatively to a beginning of the frame.

In an embodiment, a specific primitive is invoked by said MAC client (called "MA_DATA_CHUNK.request" in the examples below) for requesting a transmission service to said MAC sublayer and defines parameters related to:
- A chunk, aiming at a segment of frame to be transmitted, and
- A chunk offset, aiming at an offset of said chunk relative to a beginning of the frame.

This offset parameter (called "transmitChunkOffset" in the figures and in the examples of embodiment below) makes it possible to identify in particular the "0-offset" chunk corresponding to a beginning of a frame, and thereby to identify a new frame to transmit in the cut-through forwarding mode.

In an embodiment, the frame transmit function (called "TransmitFrame" in the examples below) calls a procedure (named *"TransmitDataEncap"* in the examples) for encapsulating frame data to transmit. This procedure includes a checking as to whether a chunk is to be processed instead of a whole frame, depending on whether said parameter ("chunkPresent") is present or not, respectively.

In this embodiment, this procedure, when said parameter is present, can prepend a preamble and a start frame delimiter at a head of a first chunk of the frame.

The usefulness of labelling the chunks' offsets and more particularly the "0" offset of the fist chunk appears therefore from this embodiment.

In this embodiment then, the first chunk can be identified by a "0" chunk offset, indicating thereby a start of a new frame.

In reception, when receiving from another communication device a frame formed according to said cut-through forwarding mode, the MAC sublayer can launch a bit receiving procedure (called "BitReceiver" below) comprising a delineation of successive chunks which are passed to the MAC client, from a train of bits received from said physical layer.

Typically, as long as a last chunk of said frame received in said cut-through forwarding mode is not received by the MAC sublayer, a specific primitive (called "MA_DATA_CHUNK.indication" below) can indicate the successive chunks passed to the MAC client.

Otherwise, when the last chunk is received by said MAC sublayer, a general primitive (called "MA_DATA.indication" below) is launched to indicate an end of reception of the whole frame.

Typically, this "general" primitive is the usual one which is called to process the whole frame reception in the usual "store and forward" mode. Indeed, for the frames' ends in particular, even in the cut-through mode, there is no need of having a primitive other than the one used in the store and forward mode, so that upper OSI layers which could ignore otherwise primitives of the cut-through mode can operate as usual for the processing of an entire frame to process in both modes.

In an embodiment where a first chunk of the received frame is identified by a "0" chunk offset, indicating thereby a start of the received frame, the aforesaid specific primitive (called below "MA_DATA_CHUNK.indication") declares furthermore at least a destination address of the frame. More particularly, a minimum size of a chunk is set as at least equal to a field bitlength of said destination address, and the MAC sublayer launches a procedure (called below "receiveChunkDecap") to decapsulate chunks of the received frame, so as to delineate at least the frame destination address from the first chunk (having the "0" offset).

The destination address is typically one of the information which can be exploited by the MAC client for example to know whether the frame is intended indeed to the communication device or whether the frame is to forward to another communication device (and should instantly be transmitted chunk by chunk through the egress port in cut-through mode). More generally, data of a first chunk having a sufficient size to include the Ethernet addresses (destination, source typically) and possibly other first data of a frame (for example tags such as the VLAN tag, or a cut-through mode tag as presented below) can be useful to inform the MAC client (or even upper layers) so as to start the frame processing like in the usual store and forward mode.

In an embodiment, a tag is added to the frame data before the frame transmission, said tag:
- indicating that the frame was formed according to the cut-through forwarding mode, and
- comprising at least one data for a frame checking at a frame reception, and wherein said communication device, at a reception of a frame from another communication device according to the cut-through forwarding mode:
   - determines whether said tag is present in the frame, and
   - in that case, reads said data in the tag to check whether the frame is erroneous or not.

In an embodiment, the aforesaid parameter related to said frame segmentation is declared among other parameters including at least a destination and/or source addresses, and said communication device, in said cut-through forwarding mode, ignores said addresses to start directly forming the frame at the egress port.

Moreover, when a communication device is not configured to implement said cut-through forwarding mode, it can ignore then the parameter related to the frame segmentation and start processing the frame data by taking into account said other parameters including at least the addresses.

Therefore, any device can still operate in the cut-through mode (if it is configured for) or in the store and forward mode, without disturbing the communication abilities of the devices.

The present disclosure aims also at a computer program comprising instructions causing the implementation of the method presented above, when such instructions are run by a processor.

It aims also at a communication device, comprising a processing circuit to implement the method defined above.

More details are presented in the specification below, with reference to the appended drawings where:
- Figure 1 illustrates MAC service primitives which can be used in a bridge of a communication device according to prior art disclosed in IEEE Std 802.1AC,
- Figure 2 illustrates primitives according to prior art handled by the MAC service (supported by the MAC sublayer as specified in IEEE Std 802.3) with the MAC client (upper layer) and the Physical layer (PHY, lower layer),
- Figure 3 illustrates a usual architecture of a VLAN bridge,
- Figure 4 illustrates a usual forwarding process function in a bridge relay entity,
- Figure 5 illustrates the control flow of a transmission operation as specified in prior art IEEE Std 802.3,
- Figure 6 illustrates the control flow of a reception operation as specified in prior art IEEE Std 802.3,

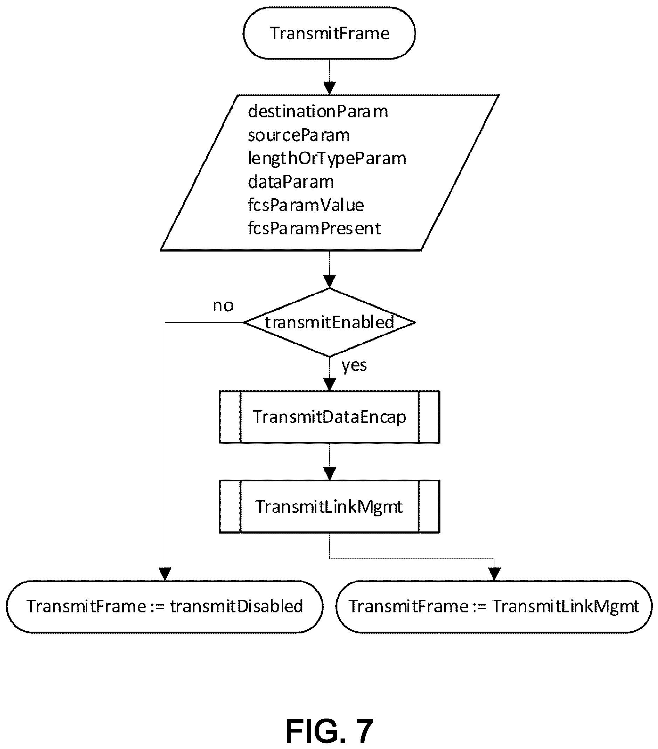

- Figure 7 illustrates the usual TransmitFrame operation according to prior art IEEE Std 802.3,

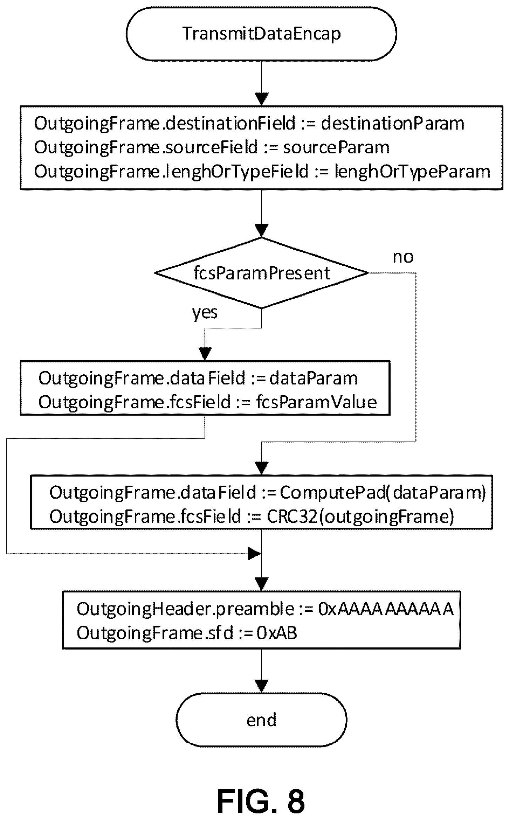

- Figure 8 illustrates the TransmitDataEncap procedure called when the TransmitFrame operation of figure 7 is launched,

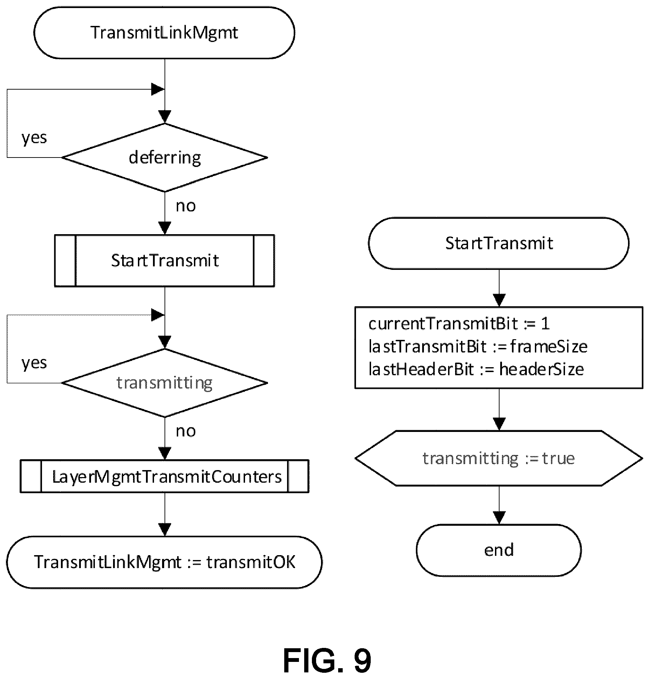

- Figure 9 illustrates the TransmitLinkMgmt procedure called when the TransmitFrame operation of figure 7 is launched,

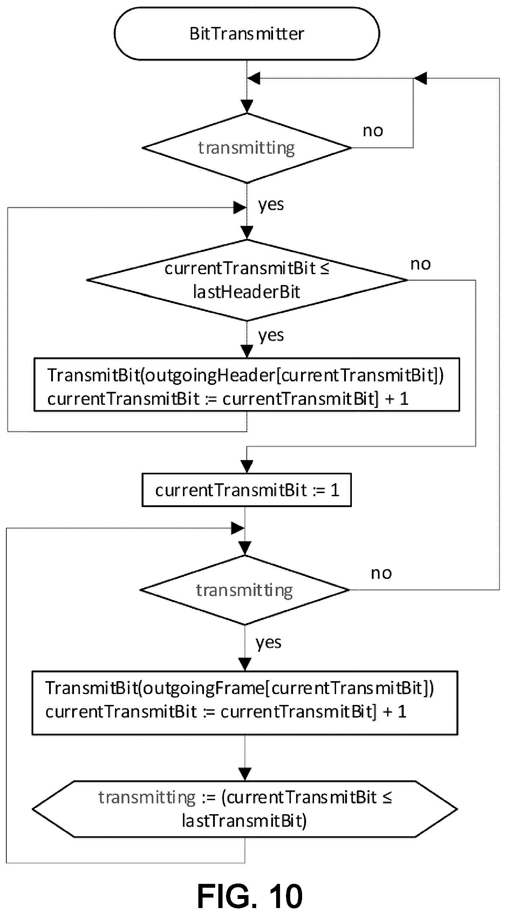

- Figure 10 illustrates the BitTransmitter process involved when the TransmitFrame operation of figure 7 is launched,

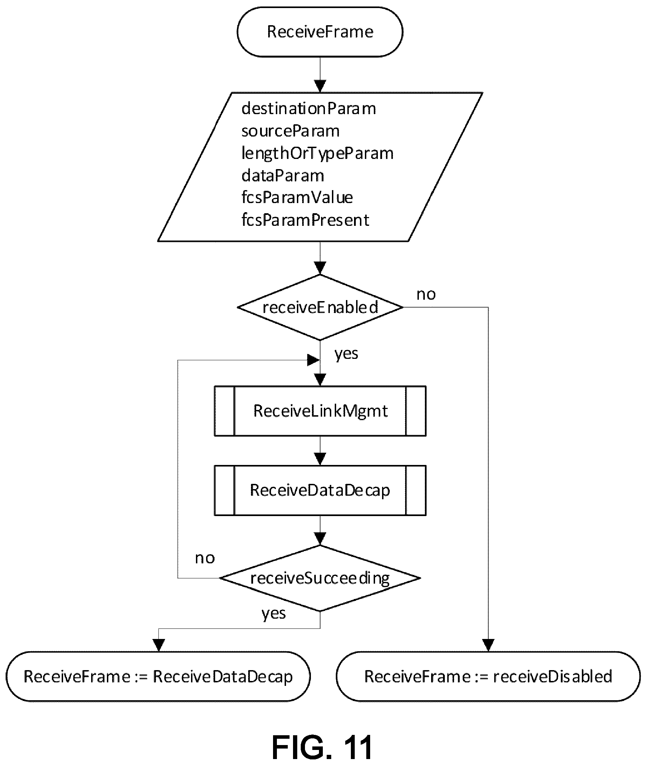

- Figure 11 illustrates the usual ReceiveFrame operation according to prior art IEEE Std 802.3,

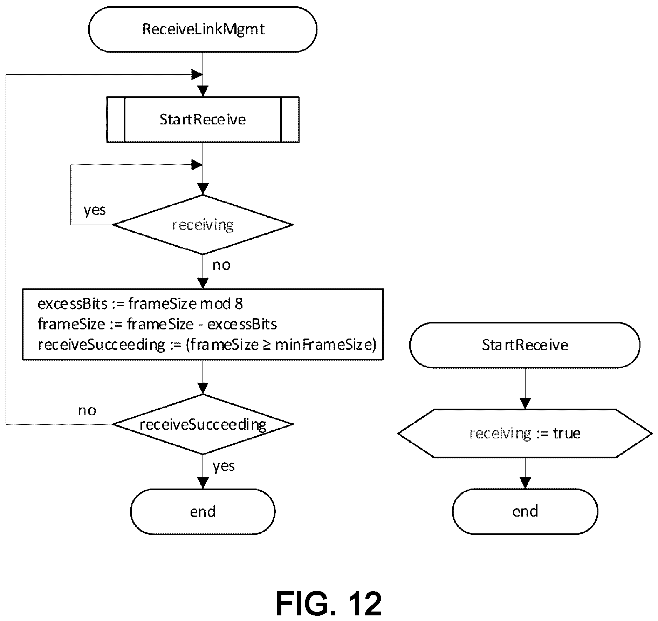

- Figure 12 illustrates the ReceiveLinkMgmt procedure called when the ReceiveFrame operation of figure 11 is launched,

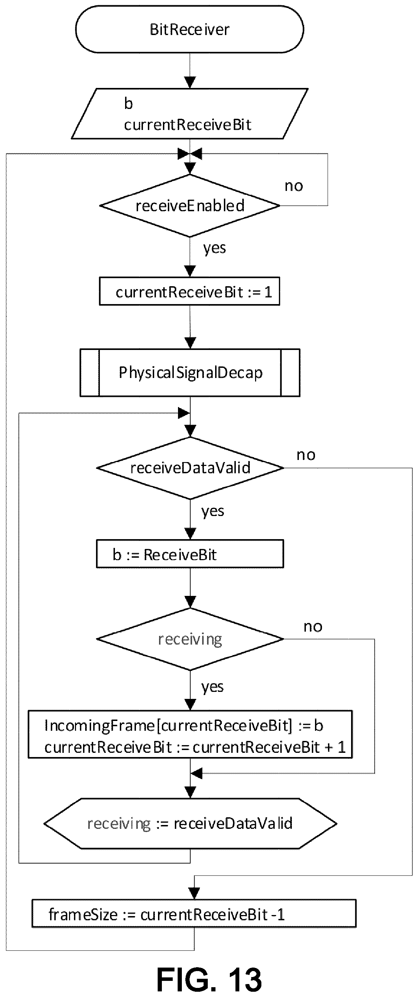

- Figure 13 illustrates the BitReceiver process involved when the ReceiveFrame operation of figure 11 is launched,

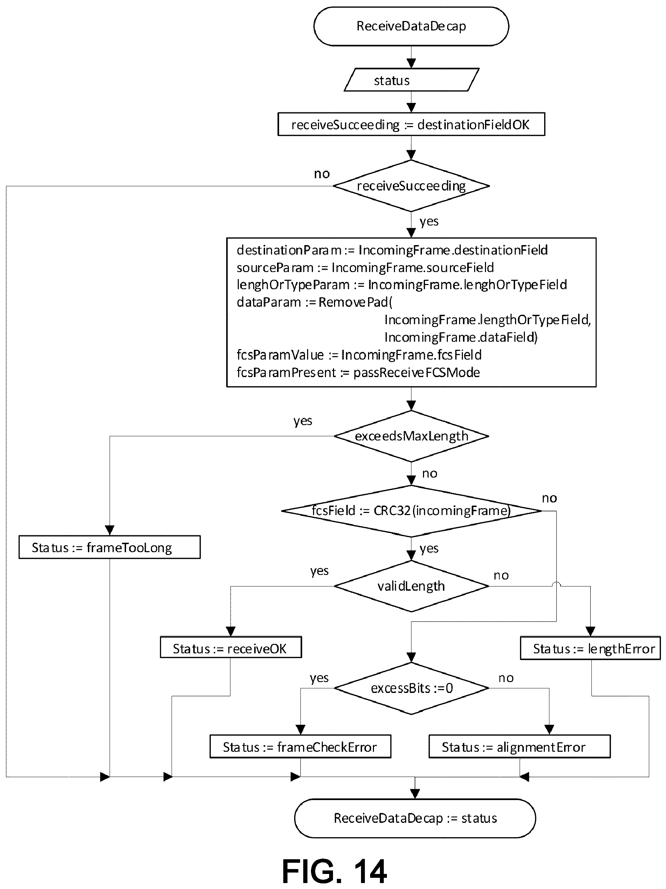

- Figure 14 illustrates the ReceiveDataEncap procedure called when the ReceiveFrame operation of figure 11 is launched,

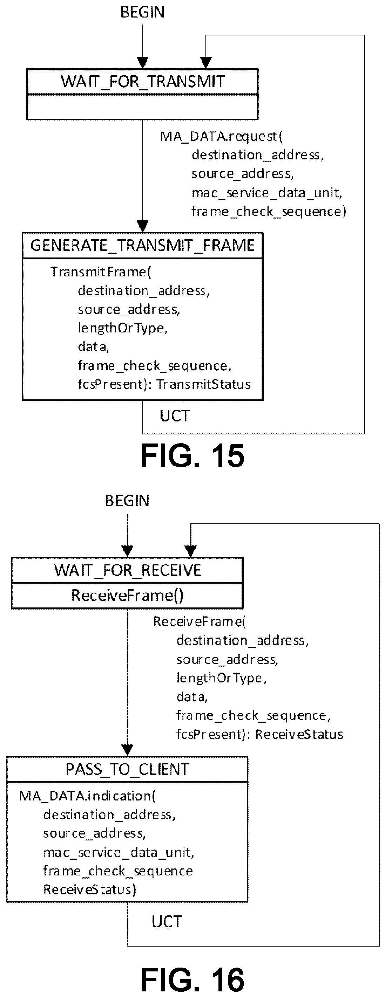

- Figure 15 shows the MAC client transmit interface operation, where the mac_service_data_unit parameter passed through the MAC client MA_DATA.request primitive is the concatenation of the lengthOrType field and the data field passed to the MAC sublayer, according to the prior art,
- Figure 16 shows the MAC client receive interface operation, where the lengthOrType field and the data payload field parsed from the received MAC frame are concatenated to form the mac_service_data_unit parameter passed with the MA_DATA.indication primitive, according to the prior art,

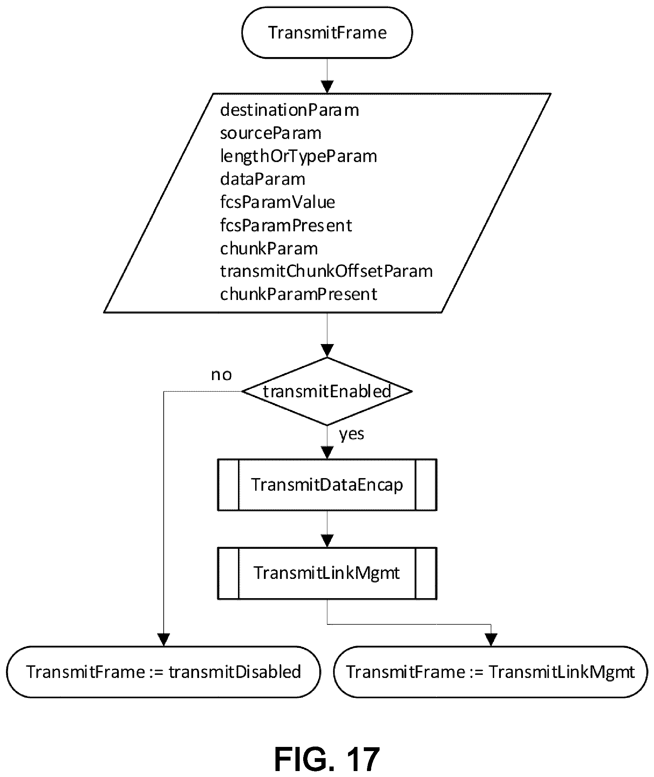

- Figure 17 shows new parameters *chunkParam, transmitChunkOffsetParam, chunkParamPresent* included in a frame to indicate the cut-through forwarding mode, here in a TransmitFrame operation, according to the present disclosure,

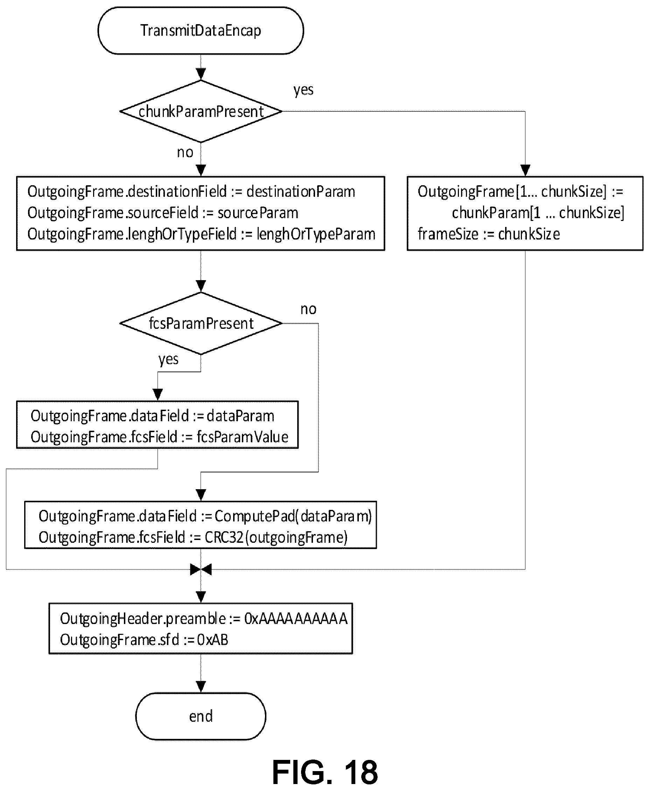

- Figure 18 shows the *TransmitDataEncap* procedure modified in the present disclosure to check if a chunk is to be processed instead of a whole frame,
- Figure 19 shows an example of state machine specifying the operation of the MAC service interface that supports both cut-through forwarding mode and the usual store-and-forward mode,

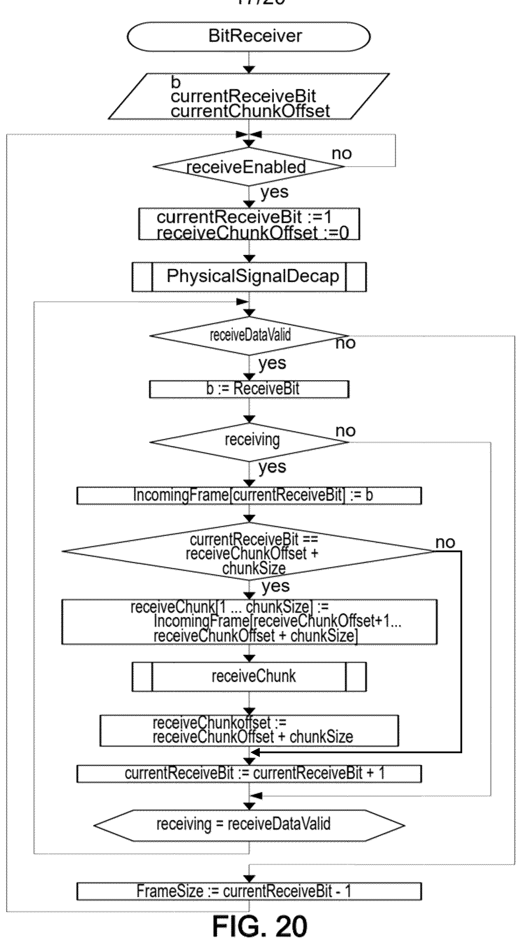

- Figure 20 shows the BitReceiver procedure modified in the present disclosure to delineate the chunks from the train of bits received from the physical layer,

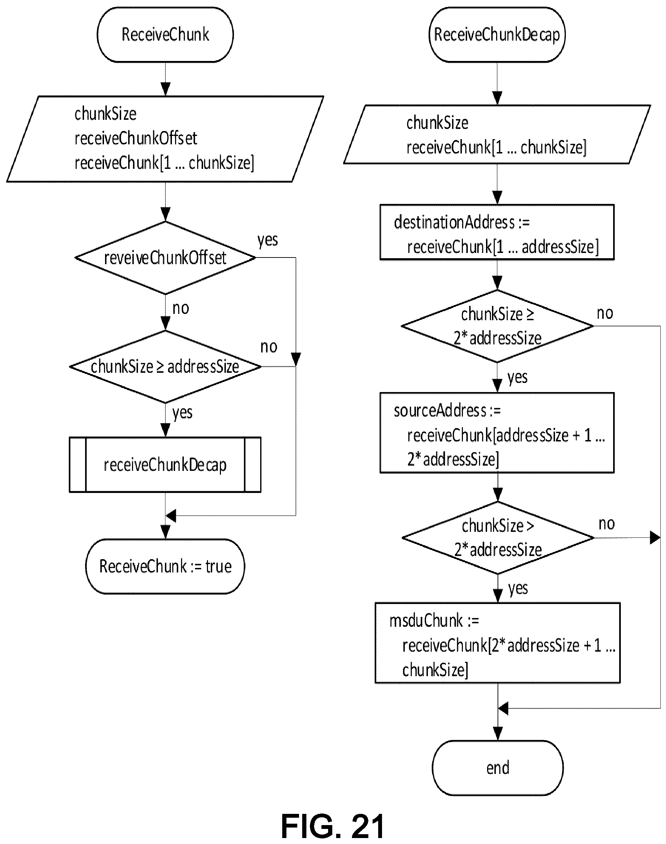

- Figure 21 shows the ReceiveChunk and the ReceiveChunkDecap procedures, implemented in the reception of an incoming frame in the cut-through forwarding mode according to the present disclosure,

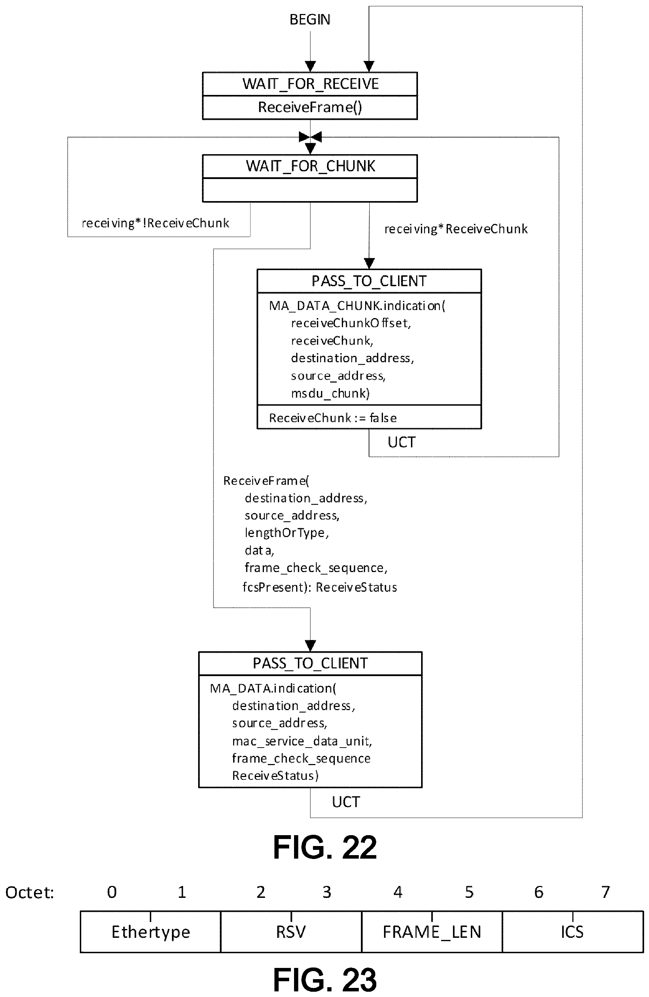

- Figure 22 shows parameters used in reception, either in the cut-through mode or in the store and forward mode, depending on whether the ReceiveChunk procedure is activated or not,
- Figure 23 shows the format of a tag included in a frame and indicating whether the frame was encoded according to the cut-through forwarding mode, according to an example of embodiment of the present disclosure,

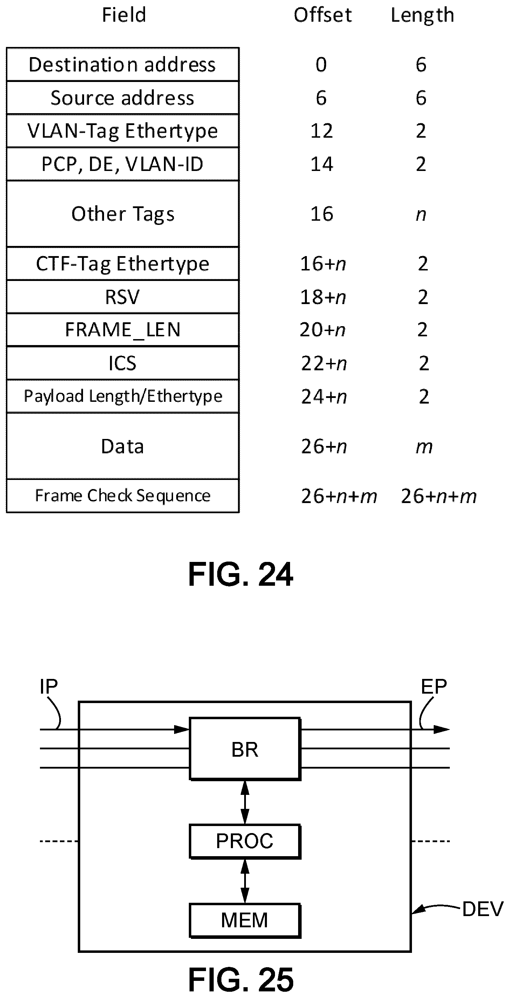

- Figure 24 shows details of the tag of figure 23, in an example of embodiment,
- Figure 25 illustrates schematically a communication device according to the present disclosure, in an example of embodiment.

The following disclosure proposes to introduce modifications in the behavior of the IEEE 802.3 MAC sublayer framing (TransmitFrame and ReceiveFrame processes) and medium management functions (BitReceiver and BitTransmitter processes). In transmission, the changes allow to start transmitting a frame as soon as a first segment is made available by the MAC client. In reception, the changes allow to start passing up the successive segments of a frame to the MAC client as soon as the first of these segments is extracted from the Physical Layer.

The standard primitives available at the Service Access Point between the MAC client and the MAC sublayer are enriched with additional primitives signaling the exchange of frame segments over this SAP. Such a set of primitives guarantees the backward compatibility for MAC clients that do not support the new SAP by simply ignoring the additional primitives.

To eliminate the risk of the MAC clients and MAC relay entities performing processing based on errored or incomplete frame information carried in the DA, SA, and MAC service data unit, a Tag is introduced, the CTF-Tag (for "Cut-Through Frame"), that includes complementary frame information and a check sequence protecting the information necessary for the MAC clients and MAC relay entities for their processing.

The following disclosure gives, in a first step, a detailed description of the frame transmission, frame reception, and primitive generation processes, as they are specified in IEEE Std 802.3 Annex 4A. Some simplifications are made, and described, for the sake of alignment with the changes later introduced to support cut-through mode.

The modified transmission, reception, primitives' generation processes as well as the CTF-Tag-based protection are then introduced later in the disclosure.

For the transmission of the IEEE 802.3 MAC Sublayer Frame, the TransmitFrame operation is synchronous of the actual frame transmission: it lasts for the entire frame transmission duration.

If transmission is enabled, the TransmitFrame operation of Figure 7 first calls a TransmitDataEncap procedure presented in Figure 8 to assemble the frame from the parameters passed by the MAC client and then calls the TransmitLinkMgmt procedure of figure 9 to initiate the actual frame transmission.

The MAC client indicates if it passes the frame check sequence for the frame through the fcsParamPresent. If it does, it also passes the fcsParamValue parameter and provides for the necessary padding. If the fcsParamPresent parameter is false, the fcsParamValue parameter is unspecified and the TransmitDataEncap first calls the ComputePad function, followed by a call to the CRC32 function (for 32-bit cyclic redundancy check) to generate the padding (if necessary) and the frame check sequence field for the frame.

It is to observe that the lengthOrTypeParam is a remain of legacy Ethernet MAC specifications. It is described later in the present disclosure how it is treated when generating the request primitive between the MAC client and sublayer.

As shown in Figure 9, procedure TransmitLinkMgmt is in charge of transmitting the frame. When deferenceMode is true, it first defers to the Physical Layer if it is not ready for the next packet and to ensure proper interframe spacing.

LayerMgmtTransmitCounters updates transmit and transmit error counters.

Each time a frame transmission is initiated, StartTransmit is called to signal the BitTransmitter process that bit-by-bit transmission can start. The *transmitting* variable is used to synchronise the TransmitLinkMgmt (reacting to events issued by the MAC client) and the BitTransmitter process that is synchronous of the physical link timing, as shown in Figure 10.

As for the IEEE 802.3 MAC Sublayer Frame Reception, the ReceiveFrame operation is synchronous of the actual frame reception: it lasts for the entire frame reception duration and completes when it is fully received, as shown in Figure 11. The fields of the frame are delivered through the output parameters with the ReceiveStatus status code.

If enabled, ReceiveFrame calls ReceiveLinkMgmt to receive the next valid frame, and then calls the internal function ReceiveDataDecap to return the frame's fields to the MAC client depending on the frame's DA (see ReceiveDataDecap's description). The returned ReceiveStatus indicates possible errors in the frame, as shown in Figure 12.

The procedure ReceiveLinkMgmt continuously initiates then the reception of frame bits, discarding any fragments smaller than the minimum valid frame size.

As shown in Figure 13, the BitReceiver process is synchronised on the Physical Layer bit timing determined by the ReceiveBit operation, partitioning them into frames.

The receiving variable is used to couple the asynchronous ReceiveLinkMgmt and BitReceiver processes.

PhysicalSignalDecap checks from successive bits from the Physical Layer if a valid Start Frame Delimiter (SFD) is detected, in which case it is discarded as presented in Figure 14.

The function ReceiveDataDecap is called by ReceiveFrame to return the frame's fields to the MAC client if the frame's address has an expected value. The returned ReceiveStatus indicates the presence or absence of detected transmission errors in the frame.

The destinationFieldOK function checks if the destination address field of the incoming frame contains the address of the receiving station. When the Ethernet interface of the station is in "promiscuous" mode, any destination address is considered as valid. The same condition applies for bridges' ingress ports, resulting in destinationFieldOK being always TRUE.

It is to observe that the lengthOrTypeParam is a remain of legacy Ethernet MAC specifications. It is described below how it is treated when generating the indication primitive between the MAC sublayer and client.

For the sake of simplifying the description, the processing (removing) of a potential padding is not shown.

As for now the IEEE 802.3 MAC Service implementation, the MAC sublayer provides services of MAC frames transmission and reception to the MAC client through the service primitives MA_DATA.request and MA_DATA.indication. The following state machines (presented in figures 15 and 16 commented below) define the relationship between the TransmitFrame and ReceiveFrame functions, and these service primitives.

Figure 15 shows the MAC client transmit interface operation, where the mac_service_data_unit parameter passed through the MAC client MA_DATA.request primitive is the concatenation of the lengthOrType field and the data field passed to the MAC sublayer.

It can be noted that the TransmitStatus can be ignored here when operating in full duplex mode.

Figure 16 shows the MAC client receive interface operation, where the lengthOrType field and the data payload field parsed from the received MAC frame are concatenated to form the mac_service_data_unit parameter passed with MA_DATA.indication primitive.

It can be noted that the ReceiveStatus included in the primitive's parameters can be ignored here by the MAC client in bridges, i.e. the ISS.

The following description specifies the modifications made to the IEEE 802.3 MAC sublayer to support cut-through forwarding. For this purpose, the frames are handled segment by segment, called "chunks" hereafter.

In transmission, the MAC client provides a series of chunks to the TransmitFrame function and guarantees that the resulting series of bits passed to the Physical Layer is uninterrupted as long as the frame to be transmitted is not completely transferred over the MAC service interface.

In reception, chunks are progressively passed up to the MAC client each time a number of bits equal to the chunk size is extracted from the Physical Layer.

The position of a chunk in the array of bits constituting a frame can be signaled by its offset relative to the beginning of the frame.

The interface of the TransmitFrame operation is modified in order to accommodate for chunk parameters.

The organization of the TransmitFrame operation is otherwise not modified:
- it first calls the TransmitDataEncap procedure to assemble the frame from the parameters passed by the MAC client, and then
- calls the TransmitLinkManagement procedure to trigger the actual frame transmission.

As shown in Figure 17, the parameter *"chunkParam"* is the chunk parameter of size *chunkSize. chunkSize* is preferably a number of octets.

*transmitChunkOffsetParam* is the offset of the chunk contained in the parameter *chunkParam.* It is preferably expressed as a number of octets relative to the beginning of the frame.

*chunkParamPresent* indicates if a chunk is passed as parameter of TransmitFrame. If TRUE, TransmitFrame takes as input parameters: *chunkParam* and *transmitChunkOffsetParam,* all other frame parameters being ignored. If FALSE, the set of parameters defined in IEEE Std 802.3 are taken as input, ignoring *chunkParam* and *transmitChunkOffsetParam.*

In cut-through mode, it is the responsibility of the MAC client to correctly insert the different fields of a frame in the successive chunks it passes to the CTF MAC sublayer: i.e. the destination and source addresses, MAC service data unit and FCS (see TransmitDataEncap description below). It is also the MAC client responsibility to guarantee that the frame length is greater than the minimum authorized frame size and that is aligned on an octet boundary.

As presented in the example of figure 18, the *TransmitDataEncap* procedure is modified to check if a chunk is to be processed instead of a whole frame. If *chunkParamPresent* is TRUE, the only action taken by this process is to prepend a preamble and an SFD at the head of the chunk. In case of cut-through operation, TransmitDataEncap does not process the legacy frame parameters (addresses, mac service data unit, FCS).

In cut-through mode, *TransmitDataEncap* is called only once for the transmission of the first chunk of the frame, for example.

The *TransmitLinkMgmt, StartTransmit* and *BitTransmitter* procedure remain unchanged compared to the one specified in IEEE Std 802.3.

As for the CTF MAC Transmission Service, a new primitive can be invoked by the MAC client and is defined below as a MA_DATA_CHUNK.request which takes as parameters:
- *Chunk:* the segment of frame to be transmitted
- *transmitChunkOffset*: the offset of the chunk relative to the beginning of the frame.

The MA_DATA.request primitive remains unchanged and is invoked when operating in store-and-forward mode.

The state machine shown in figure 19 specifies the operation of the MAC service interface that supports both cut-through and store-and-forward modes.

A new state is introduced, CONTINUE_TRANSMIT_FRAME that updates the variable handled by the asynchronous BitTransmitter procedure (lastTransmitBit, OutgoingFrame[]).

lastTransmitBit is a usual parameter indicating a frame end in the store and forward mode and here in the cut-through mode it corresponds to the last bit of the last received chunk (the last transmitted bit of the last received chunk). If the lastTransmitBit has not been updated before the Physical Layer receives a new Chunk, then the physical layer stops encoding but can interpret that the received frame is finally ended.

The modified TransmitFrame procedure is called when the MAC client invokes the MA_DATA.request primitive (store-and-forward mode) or when the MAC client invokes the MA_DATA_Chunk.request primitive with the initial chunk of a frame (transmitChunkOffset parameter equals 0).

When in cut-through mode, the MAC client continues the transmission of the successive chunks of a frame, following the initial chunk, by further invoking the MA_DATA_Chunk.request, thus updating the lastTransmitBit variable when the state machine enters the CONTINUE_TRANSMIT_FRAME state, causing the BitTransmitter process to continue providing bits for transmission by the Physical Layer.

If the MAC client is late in providing a non-initial chunk, i.e. the BitTransmitter process has finished transmitting the bits of the previous chunk and has set the transmitting variable to 0, the MA_DATA_Chunk.request primitive invocation is ignored as well as further ones until the MA_DATA_Chunk.request primitive is invoked for the transmission of an initial frame chunk.

In that case, a truncated, possibly too short, frame is transmitted (with the lastTransmitBit indication process explained above to end up a frame processing when necessary).

As for the CTF MAC Sublayer Frame Reception, the ReceiveFrame operation is left unchanged: if enabled, it first calls the ReceiveLinkMgmt procedure followed by the ReceiveDataDecap procedure.

The ReceiveLinkMgmt and the Start Receive procedures, also left unchanged, initiate the frame bit transfer between the Physical Layer and the MAC sublayer as long as the Physical Layer detects bits belonging to a physical frame.

The ReceiveDataDecap procedure is not modified either, performing the same frame checks and field decapsulation operations.

The BitReceiver procedure is modified so that it delineates the chunks from the train of bits received from the Physical Layer, as shown in figure 20.

As long as the receiveDataValid is set to TRUE by the Physical Layer, the successive bits decoded by the Physical Layer are accumulated to form the received frame (IncomingFrame[]). When a number of bits equivalent to receiveChunkSize is received, the availability of a chunk (a segment of IncomingFrame[]) is detected (receiveChunk) and the ReceiveChunk procedure is called with the parameters of the chunk: the offset of the chunk (receiveChunkOffset) and the bit array constituting the chunk (receiveChunk[]), as shown in figure 21.

The parameter receiveChunkSize is fixed and set through a configuration procedure not described in this specification. Its value is preferably a number of octets.

The ReceiveChunk procedure first checks if the chunk is the initial chunk of a frame (receiveChunkOffset equals 0). In case of an initial chunk which length is larger than the size of an Ethernet address, the receiveChunkDecap procedure is called, that attempts to delineate the destination address, the source address and the MAC service data unit or part thereof.

The ReceiveChunk procedure also returns a signal set to TRUE upon its completion. This signal is used by the CTF MAC Reception Service state machine to generate the chunk availability indication primitive towards the MAC client.

The state machine of the CTF MAC Reception Service handles the indication of the reception of a whole frame the same way for both cut-through and store-and-forward modes of operation. The last chunk of a frame received in cut-through mode is signaled by the emission of the usual primitive MA_DATA.indication.

To accommodate the cut-through mode of operation, the CTF MAC Reception service interface relies on a modified state machine and provides an additional primitive: MA_DATA_CHUNK:.indication.

MA_DATA_CHUNK.indication provides the following set of parameters to the MAC client:
- receiveChunk:
- receiveChunkOffset: the position of the received chunk in the frame, relative to the beginning of the frame
- destination_address: the destination address carried by the frame if the received chunk is the first of a frame and its length is larger than that of an address
- source_address: the source address carried by the frame if the received chunk is the first of a frame and its length is more than, or, twice as large as that of an address
- msdu_chunk: the mac service data unit, or part thereof, carried by the frame if the received chunk is the first of a frame and its length is more than twice as large as that of an address

A store-and-forward MAC client is compatible with the new service interface by simply ignoring the MA_DATA_CHUNK.indication primitives.

As shown in figure 22, after the WAIT_FOR_RECEIVE state launches the ReceiveFrame operation, chunk reception is signalled to the MAC client each time a frame fragment of receiveChunkSize is received and as long as the receiving signal is activated by the ReceiveLinkMgmt procedure and maintained by the BitReceiver procedure.

Once the frame is completely received, i.e. the receiving signal is deactivated, the standard IEEE 802.3 MA_DATA.indication is passed to the MAC client and the reception of the next frame (and chunks) is awaited.

Referring back to figure 3 again, the forwarding process included in the bridge's relay entity performs various operations on the received frames that depends on some of their data fields content and on their length.

The cut-through MAC client must also be able to determine if a received frame is to be cut-through or store-and-forwarded. For this purpose, it requires some classification information preferably present in the first frame chunk received (when the minimum latency must be achieved).

The relaying and classification information may consist in the destination and source addresses as well as additional information included in the MAC service data unit. This is for instance the case when a forwarding decision or classification is based on the combination of the destination address, VLAN-ID and PCP values. The VLAN-ID and PCP (Priority Code Point) are included in the VLAN-Tag (as specified in IEEE Std 802.1Q) that is, in most application configurations, contained in the first two octets of the mac service data unit.

In order to avoid wrong forwarding or classification decisions, an error detection code can be inserted in the frame at a position located right after the information required for these decisions. This error detection code is called Intermediate Check Sequence hereafter.

In addition, the frame length information can be explicitly signalled in another information field, also protected by the Intermediate Check Sequence.

A tag, called hereafter the "CTF-Tag", is defined as carrying the fields listed below and shown in figure 23:
- The Ethertype defining the Tag type (CTF-Tag): 2 bytes,
- A reserved field (RSV): 2-bytes,
- The frame length (FRAME_LEN): 2 bytes,
- The Intermediate Check Sequence (ICS): 2 bytes.

The CTF-Tag value is unique and possibly assigned by an IEEE Registration Authority.

The RSV field is an information place holder reserved for a further use not necessarily related to cut-through forwarding.

FRAME_LEN is a value in octets, that accumulates the lengths of the destination address, source address, mac service data unit and FCS.

The ICS is preferably a 16-bit Cyclic Redundancy Check code computed over the destination address, source address and mac service data unit part up to the CTF-Tag, including the CTF-Tag.

The CTF-Tag is inserted by the CTF MAC client prior to the transmission of the frame at an offset that is specified by the management entity of the CTF MAC client. The information of this position is used by a peer CTF MAC client (in reception) to locate the CTF-Tag and perform the ICS computation on the corresponding part of the received frame.

Figure 24 illustrates the format of a frame including a CTF-Tag.

The receive CTF MAC client discards the frame when the computed ICS value does not match the received ICS value.

When in cut-through mode of operation, the MAC client may then update a counter that counts the frame received with an errored ICS in addition to a counter of errored frames.

Figure 25 shows an example of a communication device DEV including a bridge BR comprising ingress ports IP and egress ports EP, linked to a processing circuit including a processor PROC and a memory MEM. The memory MEM stores at least instructions data of a computer program according to the present disclosure and the processor PROC can access to the memory MEM to read the instructions data and implement the method presented above (in transmission through an egress port or in reception through an ingress port).

## Claims

1. A method for transmitting an Ethernet MAC frame, implemented by a communication device having an egress port to form the frame to be transmitted based on received data of said frame, said communication device comprising a bridge comprising at least said egress port and operating according to an OSI layers' model comprising:
- a MAC sublayer for providing a MAC service,
- an upper layer related to a MAC client,
- and a lower physical layer,
The method comprising:
- Checking whether, among said data of the frame, at least one parameter (chunk, transmitChunkOffset, chunkPresent) related to a segmentation of said frame is present, and
- When said parameter is present, said MAC client provides a series of frame segments called "chunks" to the MAC sublayer to implement a frame transmit function (TransmitFrame), uninterruptedly as long as the frame to be transmitted is not completely transferred over the MAC service layer,
the forming of the frame being started at the egress port without waiting for a reception of all the frame data, according to a cut-through forwarding mode.

2. The method of claim 1, wherein said frame data further include a chunk size parameter and chunks are progressively passed up to the MAC client each time a number of bits of the frame equal to the chunk size parameter is received from said physical layer.

3. The method according to anyone of the precedent claims, wherein said frame data further include a chunk offset parameter indicating a position of a chunk in a succession of bits constituting the frame, relatively to a beginning of the frame.

4. The method according to anyone of the precedent claims, wherein a specific primitive is invoked by said MAC client (MA_DATA_CHUNK.request) for requesting a transmission service to said MAC sublayer and defines parameters related to:
- A chunk, aiming at a segment of frame to be transmitted, and
- A chunk offset (transmitChunkOffset), aiming at an offset of said chunk relative to a beginning of the frame.

5. The method according to anyone of the precedent claims, wherein the frame transmit function (TransmitFrame) calls a procedure *(TransmitDataEncap)* for encapsulating frame data to transmit, said procedure including a checking as to whether a chunk is to be processed instead of a whole frame, depending on whether said parameter (*chunkParamPresent*) is present or not, respectively.

6. The method of claim 5, wherein said procedure, when said parameter is present, prepends a preamble and a start frame delimiter at a head of a first chunk of the frame.

7. The method of claim 6, combined with claim 4, wherein said first chunk is identified by a "0" chunk offset, indicating thereby a start of a new frame.

8. The method according to anyone of the precedent claims, wherein, when receiving from another communication device a frame formed according to said cut-through forwarding mode, the MAC sublayer launches a bit receiving procedure (BitReceiver) comprising a delineation of successive chunks which are passed to the MAC client, from a train of bits received from said physical layer.

9. The method of claim 8, wherein, as long as a last chunk of said frame received in said cut-through forwarding mode is not received by the MAC sublayer, a specific primitive (MA_DATA_CHUNK.indication) indicates the successive chunks passed to the MAC client.

10. The method of claim 9, wherein, when said last chunk is received by said MAC sublayer, a general primitive (MA_DATA.indication) is launched to indicate an end of reception of the whole frame.

11. The method according to anyone of claims 9 and 10, wherein a first chunk of the received frame is identified by a "0" chunk offset, indicating thereby a start of the received frame, and wherein said specific primitive (MA_DATA_CHUNK.indication) declares furthermore at least a destination address, a minimum size of a chunk being at least equal to a field bitlength of said destination address, said MAC sublayer launching a procedure (receiveChunkDecap) to decapsulate chunks of the received frame, to delineate at least said destination address.

12. The method according to anyone of the preceding claims, wherein a tag is added to the frame data before the frame transmission, said tag:
- indicating that the frame was formed according to the cut-through forwarding mode, and
- comprising at least one data (FRAME_LEN ; ICS) for a frame checking at a frame reception, and wherein said communication device, at a reception of a frame from another communication device according to the cut-through forwarding mode:
- determines whether said tag is present in the frame, and
- in that case, reads said data in the tag to check whether the frame is erroneous or not.

13. The method according to anyone of the preceding claims, wherein said parameter related to said frame segmentation is declared among other parameters including at least a destination and/or source addresses, and wherein said communication device, in said cut-through forwarding mode, ignores said addresses to start directly forming the frame at the egress port.

14. The method according to claim 13, wherein a communication device being not configured to implement said cut-through forwarding mode, ignores said parameter related to the frame segmentation and starts processing the frame data by taking into account said other parameters including at least said addresses.

15. A computer program comprising instructions causing the implementation of the method according to anyone of the preceding claims, when such instructions are run by a processor.

16. A communication device, comprising a processing circuit to implement the method according to anyone of claims 1 to 14.

## Patentansprüche

1. Verfahren zum Übertragen eines Ethernet-MAC-Frames, welcher durch eine Kommunikationsvorrichtung implementiert wird, welche einen Ausgangsanschluss aufweist, um den Frame zu bilden, welcher auf Grundlage von empfangenen Daten des Frames übertragen werden sollen, wobei die Kommunikationsvorrichtung eine Brücke umfasst, welche wenigstens den Ausgangsanschluss umfasst, und gemäß einem OSI Layer Modell betrieben wird, umfassend:
- einen MAC-Sublayer zum Bereitstellen eines MAC-Dienstes,
- einen oberen Layer in Bezug auf einen MAC-Client,
- und einen unteren physischen Layer,
wobei das Verfahren umfasst:
- Überprüfen ob, unter den Daten des Frames, wenigstens ein Parameter (chunk, transmitChunkOffset, chunkPresent) in Bezug auf eine Segmentierung des Frames vorliegt, und
- wenn der Parameter vorliegt, der MAC-Client eine Abfolge von Frame-Segmenten, welche "Chunks" genannt werden, an den MAC-Sublayer bereitstellt, um eine Frame-Übertragung-Funktion (TransmitFrame) zu implementieren, ununterbrochen solange der Frame, welcher übertragen werden soll, nicht vollständig über den MAC-Dienst-Layer transferiert ist,
wobei das Bilden des Frames an dem Ausgangsanschluss ohne ein Warten auf einen Empfang von allen Frame-Daten gestartet wird, gemäß einem Cut-Through-Forwarding-Modus.

2. Verfahren nach Anspruch 1, wobei die Frame-Daten ferner einen Chunk-Größe-Parameter umfassen und wobei Chunks jedes Mal, wenn eine Anzahl an Bits des Frames, welche gleich dem Chunk-Größe-Parameter ist, von dem physischen Layer empfangen wird, progressive an den MAC-Client übermittelt werden.

3. Verfahren nach einem der vorhergehenden Ansprüche, wobei die Frame-Daten ferner einen Chunk-Offset-Parameter umfassen, welcher eine Position eines Chunks in einer Abfolge von Bits, welche den Frame bilden, relativ zu einem Anfang des Frames anzeigt.

4. Verfahren nach einem der vorhergehenden Ansprüche, wobei ein spezifischer Grundkörper durch den MAC-Client (MA_DATA_CHUNK.request) zum Anfordern eines Übertragung-Dienstes an den MAC-Sublayer aufgerufen wird und Parameter definiert in Bezug auf:
- einen Chunk, welcher auf ein Segment eines Frames, welcher übertragen werden soll, abzielt, und
- einen Chunk-Offset (transmitChunkOffset), welcher auf einen Offset des Chunks relativ zu einem Anfang des Frames abzielt.

5. Verfahren nach einem der vorhergehenden Ansprüche, wobei die Frame-Übertragung-Funktion (TransmitFrame) einen Ablauf (transmitDataEncap) zum Verkapseln von zu übertragenden Frame-Daten aufruft, wobei der Ablauf ein Überprüfen umfasst, ob ein Chunk verarbeitet werden soll anstatt eines gesamten Frames in Abhängigkeit davon, ob der Parameter (chunkParampresent) vorliegt beziehungsweise nicht vorliegt.

6. Verfahren nach Anspruch 5, wobei der Ablauf, wenn der Parameter vorliegt, eine Preambel voranstellt und einen Frame-Delimiter an einem Kopf eines ersten Chunks des Frames startet.

7. Verfahren nach Anspruch 6, in Kombination mit Anspruch 4, wobei der erste Chunk durch einen "0"-Chunk-Offset identifiziert wird, wodurch ein Start eines neuen Frames angezeigt wird.

8. Verfahren nach einem der vorhergehenden Ansprüche, wobei, wenn ein Frame, welcher gemäß dem Cut-Through-Forwarding-Modus gebildet wird, von einer anderen Kommunikationsvorrichtung empfangen wird, der MAC-Sublayer einen Bit-Empfang-Ablauf (BitReceiver) einführt, welcher eine Darstellung von sukzessiven Chunks umfasst, welche an den MAC-Client weitergegeben werden, von einem Strang von Bits, welche von dem physischen Layer empfangen werden.

9. Verfahren nach Anspruch 8, wobei, solange ein letzter Chunk des Frames, welcher in dem Cut-Through-Forwarding-Modus empfangen wird, durch den MAC-Sublayer nicht empfangen wird, ein spezifischer Grundkörper (MA_DATA_CHUNK.indication) die sukzessiven Chunks, welche an den MAC-Client weitergegeben werden, anzeigt.

10. Verfahren nach Anspruch 9, wobei, wenn der letzte Chunk durch den MAC-Sublayer empfangen wird, ein allgemeiner Grundkörper (MA_DATA.indication) eingeführt wird, um ein Ende eines Empfangs des ganzen Frames anzuzeigen.

11. Verfahren nach einem der Ansprüche 9 und 10, wobei ein erster Chunk des empfangenen Frames durch einen "0"-Chunk-Offset identifiziert wird, wodurch ein Start des empfangenen Frames angezeigt wird, und wobei der spezifische Grundkörper (MA_DATA_CHUNK.indication) darüber hinaus wenigstens eine Zieladresse deklariert, wobei eine minimale Größe eines Chunks wenigstens gleich zu einer Feld-Bitlänge der Zieladresse ist, wobei der MAC-Sublayer einen Ablauf (receiveChunkDecap) einführt, um Chunks des empfangenen Frames zu entkapseln, um wenigstens die Zieladresse darzustellen.

12. Verfahren nach einem der vorhergehenden Ansprüche, wobei ein Tag zu den Frame-Daten vor der Frame-Übertragung hinzugefügt wird, wobei der Tag:
- anzeigt, dass der Frame gemäß dem Cut-Through-Forwarding-Modus gebildet wurde, und
- wenigstens eine Dateneinheit (Frame_LEN;ICS) zum Frame-Überprüfen bei einem Frame-Empfang umfasst, und wobei die Kommunikationsvorrichtung bei einem Empfang eines Frames von einer anderen Kommunikationsvorrichtung gemäß dem Cut-Through-Forwarding-Modus:
- bestimmt, ob der Tag in dem Frame vorliegt, und
- in diesem Fall, diese Daten in dem Tag ausliest, um zu überprüfen, ob der Frame fehlerhaft ist oder nicht.

13. Verfahren nach einem der vorhergehenden Ansprüche, wobei der Parameter, welcher auf die Frame-Segmentierung bezogen ist, unter anderen Parametern, umfassend wenigstens eine Ziel- und/oder Quelladressen, deklariert wird, und wobei die Kommunikationsvorrichtung, in dem Cut-Through-Forwarding-Modus, die Adressen ignoriert, um direkt zu starten, den Frame des Ausgangsanschlusses zu bilden.

14. Verfahren nach Anspruch 13, wobei eine Kommunikationsvorrichtung, welche nicht dazu eingerichtet ist, den Cut-Through-Forwarding-Modus zu implementieren, den Parameter, welcher auf die Frame-Segmentierung bezogen ist, ignoriert und ein Verarbeiten der Frame-Daten durch ein Berücksichtigen der anderen Parameter, umfassend wenigstens die Adressen, startet.

15. Computerprogramm, umfassend Anweisungen, welche die Implementierung des Verfahrens nach einem der vorhergehenden Ansprüche veranlassen, wenn solche Anweisungen durch einen Prozessor ausgeführt werden.

16. Kommunikationsvorrichtung, umfassend eine Verarbeitungsschaltung zum Implementieren des Verfahrens nach einem der Ansprüche 1 bis 14.

## Revendications

1. Procédé d'émission d'une trame Ethernet MAC, mis en œuvre par un dispositif de communication ayant un port de sortie pour former la trame à émettre sur la base de données reçues de ladite trame, ledit dispositif de communication comprenant un pont comprenant au moins ledit port de sortie et fonctionnant selon un modèle de couches OSI comprenant :
- une sous-couche MAC pour fournir un service MAC,
- une couche supérieure liée à un client MAC,
- et une couche physique inférieure,
le procédé comprenant :
- la vérification si, parmi lesdites données de la trame, au moins un paramètre (chunk, transmitChunkOffset, chunkPresent) lié à une segmentation de ladite trame est présent, et
- lorsque ledit paramètre est présent, ledit client MAC fournit une série de segments de trame appelés «blocs » à la sous-couche MAC pour mettre en œuvre une fonction d'émission de trame (TransmitFrame), ininterrompue tant que la trame à transmettre n'est pas complètement transférée sur la couche de service MAC, la formation de la trame étant démarrée au niveau du port de sortie sans attendre une réception de toutes les données de trame, selon un mode de transfert à la volée.

2. Procédé selon la revendication 1, dans lequel lesdites données de trame incluent en outre un paramètre de taille de bloc et des blocs sont transmis progressivement au client MAC chaque fois qu'un nombre de bits de la trame égal au paramètre de taille de bloc est reçu à partir de ladite couche physique.

3. Procédé selon l'une quelconque des revendications précédentes, dans lequel lesdites données de trame incluent en outre un paramètre de décalage de bloc indiquant une position d'un bloc dans une succession de bits constituant la trame, par rapport à un début de la trame.

4. Procédé selon l'une quelconque des revendications précédentes, dans lequel une primitive spécifique est invoquée par ledit client MAC (MA_DATA_CHUNK.request) pour demander un service d'émission vers ladite sous-couche MAC et définit des paramètres liés à :
- un bloc, visant un segment de trame à émettre, et
- un décalage de bloc (transmitChunkOffset), visant un décalage dudit bloc par rapport à un début de la trame.

5. Procédé selon l'une quelconque des revendications précédentes, dans lequel la fonction d'émission de trame (TransmitFrame) appelle une procédure (*TransmitDataEncap*) pour l'encapsulation de données de trame à émettre, ladite procédure comportant une vérification si un bloc doit être traité au lieu d'une trame entière, selon que ledit paramètre (*chunkParamPresent*) est présent ou non, respectivement.

6. Procédé selon la revendication 5, dans lequel ladite procédure, lorsque ledit paramètre est présent, ajoute un préambule et un délimiteur de trame de départ en tête d'un premier bloc de la trame.

7. Procédé selon la revendication 6, combiné avec la revendication 4, dans lequel ledit premier bloc est identifié par un décalage de bloc « 0 », indiquant ainsi un début d'une nouvelle trame.

8. Procédé selon l'une quelconque des revendications précédentes, dans lequel, lors de la réception d'une trame formée selon ledit mode de transfert à la volée à partir d'un autre dispositif de communication, la sous-couche MAC lance une procédure de réception de bits (BitReceiver) comprenant une délimitation de blocs successifs qui sont émis vers le client MAC, à partir d'un train de bits reçu à partir de ladite couche physique.

9. Procédé selon la revendication 8, dans lequel, tant qu'un dernier bloc de ladite trame reçue dans ledit mode de transfert à la volée n'est pas reçu par la sous-couche MAC, une primitive spécifique (MA_DATA_CHUNK.indication) indique les blocs successifs émis vers le client MAC.

10. Procédé selon la revendication 9, dans lequel, lorsque ledit dernier bloc est reçu par ladite sous-couche MAC, une primitive générale (MA_DATA.indication) est lancée pour indiquer une fin de réception de la trame entière.

11. Procédé selon l'une quelconque des revendications 9 et 10, dans lequel un premier bloc de la trame reçue est identifié par un décalage de bloc « 0 », indiquant ainsi un début de la trame reçue, et dans lequel ladite primitive spécifique (MA_DATA_CHUNK.indication) déclare en outre au moins une adresse de destination, une taille minimale d'un bloc étant au moins égale à une longueur de bit de champ de ladite adresse de destination, ladite sous-couche MAC lançant une procédure (receiveChunkDecap) pour désencapsuler des blocs de la trame reçue, pour délimiter au moins ladite adresse de destination.

12. Procédé selon l'une quelconque des revendications précédentes, dans lequel une étiquette est ajoutée aux données de trame avant l'émission de trame, ladite étiquette :
- indiquant que la trame a été formée selon le mode de transfert à la volée, et
- comprenant au moins une donnée (FRAME_LEN ; ICS) pour une vérification de trame à une réception de trame, et dans lequel ledit dispositif de communication, à une réception d'une trame provenant d'un autre dispositif de communication selon le mode de transfert à la volée :
- détermine si ladite étiquette est présente dans la trame, et
- dans ce cas, lit lesdites données dans l'étiquette pour vérifier si la trame est erronée ou non.

13. Procédé selon l'une quelconque des revendications précédentes, dans lequel ledit paramètre lié à ladite segmentation de trame est déclaré parmi d'autres paramètres comportant au moins une destination et/ou des adresses sources, et dans lequel ledit dispositif de communication, dans ledit mode de transfert à la volée, ignore lesdites adresses pour démarrer directement la formation de la trame au niveau du port de sortie.

14. Procédé selon la revendication 13, dans lequel un dispositif de communication qui n'est pas configuré pour mettre en œuvre ledit mode de transfert à la volée, ignore ledit paramètre lié à la segmentation de trame et démarre le traitement des données de trame en prenant en compte lesdits autres paramètres comportant au moins lesdites adresses.

15. Programme informatique comprenant des instructions amenant la mise en œuvre du procédé selon l'une quelconque des revendications précédentes, lorsque ces instructions sont exécutées par un processeur.

16. Dispositif de communication, comprenant un circuit de traitement pour mettre en œuvre le procédé selon l'une quelconque des revendications 1 à 14.
